# EUROPÄISCHE PATENTANMELDUNG

(11) **EP 3 812 638 A1**
(43) Veröffentlichungstag der Anmeldung: **28.04.2021**
(21) Anmeldenummer: 20196856.7
(22) Anmeldetag: 18.09.2020
(51) Int. Cl.: F16L 53/32, F16L 53/70, F16L 11/12, F16L 11/22

(54) **SCHLAUCHANORDNUNG MIT DRUCKGASLEITUNG UND FLUIDLEITUNG ZU DEREN TEMPERIERUNG**

(30) Priorität: 21.10.2019 DE 102019128391
(71) Anmelder: Copps GmbH, 74321 Bietigheim-Bissingen (DE)
(72) Erfinder:
(74) Vertreter: DREISS Patentanwälte PartG mbB

(57) **Zusammenfassung**

Eine Schlauchanordnung (10), mit einer Druckgasleitung (16), ist im Hinblick darauf, mit einfachen konstruktiven Mitteln eine sichere und zuverlässige Temperierung zu ermöglichen, derart ausgestaltet und weitergebildet, dass eine Fluidleitung (22) zur Temperierung der Druckgasleitung (16) vorgesehen ist, wobei die Fluidleitung (22) an oder in der Druckgasleitung (16) angeordnet ist und sich entlang der Druckgasleitung (16) erstreckt.

Eine Versorgungseinheit (100) für eine Schlauchanordnung (10) sowie eine Kombination einer Schlauchanordnung (10) und einer Versorgungseinheit (100) sind angegeben.

## Beschreibung

Die vorliegende Erfindung betrifft eine Schlauchanordnung mit den Merkmalen des Oberbegriffs von Anspruch 1. Zudem betrifft die Erfindung eine Versorgungseinheit für eine Schlauchanordnung mit den Merkmalen des Oberbegriffs des nebengeordneten Anspruchs. Schließlich betrifft die Erfindung eine Kombination aus einer solchen Schlauchanordnung und einer solchen Versorgungseinheit.

Schlauchanordnungen der eingangs genannten Art sind aus dem Stand der Technik bekannt, bspw. in Form von im Handel erhältlichen und über eine Druckgasleitung verfügenden Schlauchanordnungen ("Druckluftschläuche"). Hiermit lässt sich ein Druckgas flexibel zum Entnahmeort führen, allerdings unterliegt die Druckgasleitung und das in der Druckgasleitung geführte Druckgas dem Einfluss von Umgebungsbedingungen (Luftdruck und Temperatur). Dadurch kann es zu unerwünschtem Erwärmen oder Abkühlen von Druckgasleitung und Druckgas kommen. Zwar existieren Lösungsansätze mit elektrischen Heizspiralen für Schlauchanordnungen. Allerdings eignen sich solche Lösungen nur für spezielle Anwendungen, wobei eine Verwendung in explosionsgeschützten Bereichen ("Ex-Schutz-Bereich") nicht möglich ist.

Der Erfindung liegt die Aufgabe zugrunde, bei Schlauchanordnungen mit einfachen konstruktiven Mitteln eine sichere und zuverlässige Temperierung zu ermöglichen.

Die Erfindung löst diese Aufgabe durch eine Schlauchanordnung mit Merkmalen des Anspruchs 1. Danach zeichnet sich die Schlauchanordnung dadurch aus, dass eine Fluidleitung zur Temperierung (bspw. Beheizung) der Druckgasleitung vorgesehen ist, wobei die Fluidleitung an oder in der Druckgasleitung angeordnet ist und sich entlang der Druckgasleitung erstreckt.

Auf diese Weise lässt an einer Schlauchanordnung mit einfachen konstruktiven Mitteln eine Temperierung realisieren, indem eine Fluidleitung vorgesehen ist, die an oder in der Druckgasleitung angeordnet ist und, bspw. durch Speisung mit beheizter Flüssigkeit (z.B. beheiztem Wasser) zur Temperierung der Druckgasleitung bzw. von darin enthaltenem Druckgas dient. Somit lässt sich eine flüssigkeitsbasierte Schlauchheizung verwirklichen. Dadurch kann, insbesondere bei feuchtem oder befeuchtetem Druckgas, Kondensation in der Druckgasleitung vermieden werden. Somit kann bei Bereitstellung von Druckgas an einer Sprühvorrichtung, bspw. einer Beschichtungsanlage oder einer Beschichtungspistole, ein vergleichsweise hochwertiges Sprühergebnis erzielt werden. Dadurch lässt sich eine hochwertige Beschichtung bzw. Lackierung erreichen.

Die Schlauchanordnung weist ein anschlussseitiges Ende auf, an dem sich ein Anschlusselement der Druckgasleitung und optional beide Anschlüsse der Fluidleitung befinden. Das anschlussseitige Ende kann einer Versorgungseinheit zugewandt bzw. an die Versorgungseinheit angeschlossen sein. Mit anderen Worten kann stromaufwärts des anschlussseitigen Endes eine Versorgungseinheit angeordnet sein. Die Schlauchanordnung weist außerdem ein freies Ende auf, an dem sich ein weiteres Anschlusselement der Druckgasleitung befindet. Stromabwärts des freien Endes kann ein Abnehmer an das Anschlusselement angeschlossen sein, bspw. eine Beschichtungspistole.

Im Rahmen einer bevorzugten Ausgestaltung kann die Druckgasleitung zumindest an einem Ende, vorzugsweise jeweils an beiden Enden, ein Anschlusselement zum Anschluss an Druckgas bereitstellende oder verbrauchende Komponenten aufweisen. Hiermit ist ein einfacher Anschluss der Druckgasleitung an andere Komponenten ermöglicht. Bei dem Anschlusselement kann es sich um einen Kupplungsstecker, eine Kupplung oder einen Schraubanschluss handeln.

Alternativ oder ergänzend kann die Fluidleitung an einem Ende ein erstes Anschlusselement und am anderen Ende ein zweites Anschlusselement zum Anschluss an fluidführende Komponenten aufweisen. Dies ermöglicht einen einfachen Anschluss der Fluidleitung. Bei den Anschlusselementen kann es sich bspw. um einen Schraubanschluss handeln.

In vorteilhafter Weise können das erste Anschlusselement und das zweite Anschlusselement der Fluidleitung beide am gleichen Ende der Druckgasleitung bzw. der Schlauchanordnung angeordnet sein, insbesondere am anschlussseitigen Ende. Dies vereinfacht die Handhabung, da sich die Anschlusselemente der Fluidleitung und ggf. auch ein Anschluss der Druckgasleitung an einem Ende der Druckgasleitung bzw. der Schlauchanordnung befinden.

Im Rahmen einer bevorzugten Ausgestaltung können die Druckgasleitung und die Fluidleitung ineinander geführt sein (Leitung in Leitung bzw. Rohr in Rohr). Mit anderen Worten kann eine Leitung radial innerhalb der anderen Leitung angeordnet sein, wobei die Mittellängsrichtungen der Leitungen parallel oder koaxial zueinander angeordnet sein können. Dabei kann die Druckgasleitung radial innerhalb der Fluidleitung angeordnet sein oder die Fluidleitung radial innerhalb der Druckgasleitung. Dadurch lässt sich eine materialsparende Ausführung erreichen, da die Leitungslängen von Druckgasleitung und Fluidleitung einander entsprechen. Zudem lässt sich ein hinreichender Explosionsschutz erzielen.

Alternativ hierzu kann sich die Druckgasleitung entlang einer Längsrichtung (bspw. Mittellängsrichtung) erstrecken und die Fluidleitung kann zumindest abschnittsweise wendelförmig an oder in der Druckgasleitung geführt sein. Dadurch lässt sich eine konstruktiv einfache Ausführung erreichen, da bei der Druckgasleitung und der Fluidleitung auf im Handel erhältliche Schlauchleitungen zurückgegriffen und die Schlauchanordnung hieraus gebildet werden kann. Die wendelförmige Führung der Fluidleitung erlaubt eine insgesamt flexiblere Ausgestaltung der Schlauchanordnung. Durch die verglichen mit der Druckgasleitung größere Länge der Fluidleitung lassen sich große Wärmemengen übertragen. Die Fluidleitung weist vorzugsweise einen geringeren Durchmesser als die Druckgasleitung auf.

In vorteilhafter Weise kann die Fluidleitung einen vorlaufenden Abschnitt und einen rücklaufenden Abschnitt aufweisen, wobei sich der vorlaufende Abschnitt ausgehend vom anschlussseitigen Ende, insbesondere vom ersten Anschlusselement, entlang, insbesondere parallel, zu der Druckluftleitung zum freien Ende der Druckluftleitung erstreckt, und wobei sich der rücklaufende Abschnitt wendelförmig (Heizspirale) an oder in der Druckgasleitung zum anschlussseitigen Ende, insbesondere zum zweiten Anschlusselement, erstreckt. Auf diese Weise wird der Bereich am freien Ende der Schlauchanordnung am stärksten erwärmt, da über den Vorlauf beheizte Flüssigkeit recht schnell an das freie Ende und von dort durch die wendelförmige Wicklung (allmählich) zurück an das anschlussseitige Ende geführt wird.

Der vorlaufende Abschnitt geht an einem Umkehrpunkt in den rücklaufenden Abschnitt über. Der Umkehrpunkt befindet sich vorzugsweise möglichst nahe am freien Ende der Druckgasleitung bzw. der Schlauchanordnung.

Die wendelförmige Wicklung kann insbesondere als Helix ausgebildet sein, die pro Wicklung bzw. Umdrehung mit einer vorgegebenen Steigung (Ganghöhe) ansteigt.

Im Rahmen einer bevorzugten Ausgestaltung kann die Fluidleitung oder der rücklaufende Abschnitt mehrere Bereiche aufweisen, in denen die wendelförmigen Wicklungen jeweils unterschiedlich dicht gewickelt sind. Mit anderen Worten kann der Wendel mehrere Bereiche aufweisen, in denen die Steigung bzw. die Ganghöhe der Wendel unterschiedlich groß sind. Bspw. kann die wendelförmige Wicklung in einem ersten Bereich eine erste Ganghöhe aufweisen und in einem zweiten Bereich eine zweite Ganghöhe, die größer als die erste Ganghöhe ist. Somit können durch Variation der Wicklungsdichte entlang der Druckgasleitung verschiedene Temperaturzonen ausgebildet werden.

In vorteilhafter Weise kann die Fluidleitung oder der rücklaufende Abschnitt am freien Ende der Druckluftleitung einen Bereich aufweisen, in dem die wendelförmige Wicklung die höchste Dichte aufweist, mithin also über die geringste Ganghöhe verfügt. Somit ist am freien Ende eine Temperaturzone
mit der höchsten Temperatur geschaffen. Somit kann das Risiko von Kondensation in der Druckgasleitung am freien Ende geringgehalten werden.

Im zweckmäßiger Weise kann in der Druckgasleitung der Schlauchanordnung ein Temperatur- und/oder Feuchtigkeitssensor angeordnet sein, der eine drahtlose oder drahtgebundene Signalübertragung aufweist. Dadurch können Temperatur und/oder Feuchtigkeit direkt im Schlauch erfasst und drahtlos oder drahtgebunden bspw. an eine Steuerung einer Versorgungseinheit übertragen werden. Da das Risiko von Kondensation mit der Leitungslänge ansteigt, ist es von Vorteil, wenn der Temperatur- und/oder Feuchtigkeitssensor im vorderen (am freien Ende befindlichen) Drittel der Druckgasleitung bzw. der Schlauchanordnung angeordnet ist.

In vorteilhafter Weise kann in der Druckgasleitung der Schlauchanordnung ein Tropfenabscheider angeordnet sein. Hiermit kann eine an sich unerwünschte Abgabe von Flüssigkeitstropfen verhindert werden, indem diese im Tropfenabscheider aufgefangen werden. Es ist von Vorteil, den Tropfenabscheider möglichst im vorderen (am freien Ende befindlichen) Drittel der Druckgasleitung anzuordnen. Aus Handhabungsgründen ist es bevorzugt, den Tropfenabscheider ca.

60 bis 100 Zentimeter beabstandet vom freien Ende der Druckgasleitung anzuordnen. Optional kann der Tropfenabscheider zur Sichtkontrolle ein Sichtfenster aufweisen.

Im Rahmen einer bevorzugten Ausgestaltung kann in der Druckgasleitung der Schlauchanordnung eine Einspritzstelle zum Einspritzen beheizter Flüssigkeit, insbesondere von Heißwasser, angeordnet sein. Dadurch kann eine Befeuchtung des Druckgases direkt in der Druckgasleitung erfolgen. Dadurch kann das Risiko von Kondensation abermals reduziert werden. Die Einspritzstelle kann von einer Flüssigkeitsversorgung gespeist werden, die bspw. einer stromaufwärts der Druckgasleitung angeordneten Versorgungseinheit zugeordnet ist. Die Einspritzstelle kann optional eine Zerstäuberdüse aufweisen. Für eine konstruktiv einfache Ausgestaltung kann die Einspritzstelle mittels eines T-Stücks (T-färmiger Rohrleitungsabschnitt) in die Druckgasleitung eingebunden sein.

Die eingangs genannte Aufgabe wird auch durch eine Versorgungseinheit mit den Merkmalen des nebengeordneten Anspruchs gelöst. Hinsichtlich der damit erzielbaren Vorteile sei auf die obigen Ausführungen zur Schlauchanordnung verwiesen.

Die Versorgungseinheit zeichnet sich dadurch aus, dass die Versorgungseinheit einen Ausgang zur Bereitstellung von Druckgas aufweist und dass die Versorgungseinheit eine Heizeinrichtung zur Beheizung einer Flüssigkeit aufweist, wobei die Heizeinrichtung einen Vorlaufanschluss zur Abgabe beheizter Flüssigkeit und einen Rücklaufanschluss zur Einspeisung rückgeführter Flüssigkeit aufweist.

Der Vorlaufanschluss, der Rücklaufanschluss und der Ausgang können in einem Anschlussbereich benachbart zueinander angeordnet sein. Hierdurch kann ein Anschlussterminal ausgebildet werden.

Somit ist eine Versorgungseinheit zur Bereitstellung eines Druckgases und von Wärmeenergie zum flüssigkeitsbasierten Beheizen (Flüssigkeit dient als Trägermedium) einer Schlauchanordnung bzw. einer Druckgasleitung geschaffen.

In vorteilhafter Weise kann die Heizeinrichtung ein Heizelement, eine Pumpe, eine Entlüftung und/oder ein Druckausgleichselement (Druckausgleichsbehälter) aufweisen. Durch das Heizelement kann in der Versorgungseinheit eine Erwärmung des Trägermediums (Flüssigkeit, bspw. Wasser) erfolgen. Das Heizelement kann als elektrisches Heizelement, Wärmepumpenheizung, Holzheizung (Hackschnitzel oder Pellets) oder Solarheizung ausgebildet sein. Die Pumpe dient zum Antrieb bzw. der Zirkulation des Trägermediums.

Der Rücklaufanschluss und der Vorlaufanschluss sind strömungsverbunden. Eine oder mehrere der voranstehend genannten Komponenten (Heizelement, Pumpe, Entlüftung und/oder Druckausgleichselement) können in der Strömungsverbindung angeordnet sein. Unabhängig davon kann die Versorgungseinheit eine Flüssigkeitsversorgung aufweisen, die eine in der Druckgasleitung der Schlauchanordnung angeordnete Einspritzstelle speist.

In zweckmäßiger Weise kann eine Steuerung für die Versorgungseinheit vorgesehen sein. Damit können die Versorgungseinheit bzw. deren Komponenten angesteuert und/oder überwacht werden. Alternativ oder ergänzend kann eine Druckgasquelle zur Bereitstellung von Druckgas vorgesehen sein, wobei die Druckgasquelle mit dem Ausgang strömungsverbunden ist. Somit kann eine Druckgasleitung der Schlauchanordnung mit Druckgas versorgt werden. Optional kann zwischen Druckgasquelle und Ausgang eine in der Versorgungseinheit angeordnete Befeuchtungseinheit zur Befeuchtung des Druckgases mittels einer Flüssigkeit angeordnet sein.

Die eingangs genannte Aufgabe wird auch durch eine Kombination aus einer Schlauchanordnung und einer Versorgungseinheit, jeweils wie voranstehend beschrieben, gelöst.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigt:

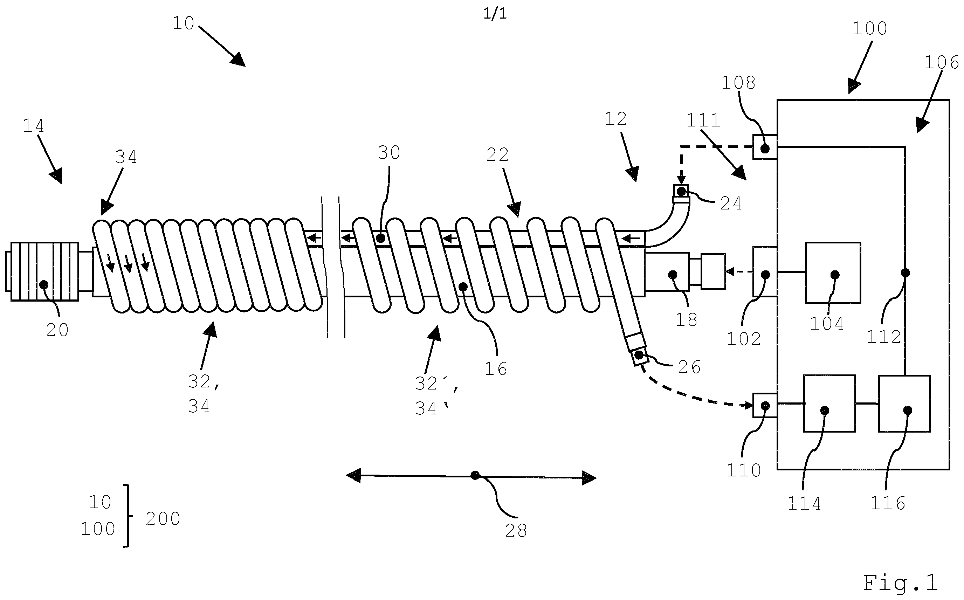

- Fig.1: eine Ausführungsform einer Schlauchanordnung, einer Versorgungseinheit und einer Kombination aus Schlauchanordnung und Versorgungseinheit.

Figur 1 zeigt eine Kombination aus einer Schlauchanordnung 10 und einer Versorgungseinheit 100, wobei die Kombination insgesamt mit dem Bezugszeichen 200 bezeichnet ist. Die Schlauchanordnung 10 und die Versorgungseinheit 100 werden nachfolgend beschrieben.

Die Schlauchanordnung 10 weist ein anschlussseitiges Ende 12 und ein freies Ende 14 auf. Am anschlussseitigen Ende 12 kann die Schlauchanordnung 10 an die Versorgungseinheit 100 angeschlossen werden. Am freien Ende 14 kann eine Druckgas verbrauchende Komponente an die Schlauchanordnung 10 angeschlossen werden, bspw. eine Beschichtungspistole (nicht gezeigt).

Die Schlauchanordnung 10 weist eine Druckgasleitung 16 auf, mittels der ein Druckgas vom anschlussseitigen Ende 12 zum freien Ende 14 geführt werden kann. Die Druckgasleitung 16 weist am anschlussseitigen Ende 12 ein Anschlusselement 18, bspw. einen Kupplungsstecker, und am freien Ende 14 ein weiteres Anschlusselement 20 auf, bspw. eine Kupplung.

Die Schlauchanordnung 10 weist zudem eine Fluidleitung 22 zur Temperierung bzw. Beheizung der Druckgasleitung 16 auf. Die Fluidleitung 22 ist im Ausführungsbeispiel an der Druckgasleitung 16 angeordnet und erstreckt sich entlang der Druckgasleitung 16 (andere Anordnung der Fluidleitung 22 ebenfalls denkbar; siehe oben).

Die Fluidleitung 22 weist an einem Ende ein erstes Anschlusselement 24 und am anderen Ende ein zweites Anschlusselement 26, jeweils zum Anschluss an die Versorgungseinheit 100 auf. Das erste Anschlusselement 24 und das zweite Anschlusselement 26 sind beide am gleichen Ende der Druckgasleitung 16 bzw. der Schlauchanordnung 10 angeordnet, nämlich am anschlussseitigen Ende 12.

Im Ausführungsbeispiel erstreckt sich die Druckgasleitung 16 entlang einer (nicht eingezeichneten) Längsrichtung 28 und die Fluidleitung 22 ist abschnittsweise wendelförmig an der Druckgasleitung 16 geführt.

Die Fluidleitungen 22 weist einen vorlaufenden Abschnitt 30 und einen rücklaufenden Abschnitt 32, 32' auf. Der vorlaufende Abschnitt 30 erstreckt sich vom ersten Anschlusselement 24 bis zum freien Ende 14 der Druckgasleitung 16. Der vorlaufende Abschnitt 30 verläuft, jedenfalls weitestgehend, entlang bzw. parallel zu der Druckgasleitung 16 zum freien Ende 14 der Druckgasleitung 16 hin. An einem Umkehrpunkt 34 geht der vorlaufende Abschnitt 30 in den rücklaufenden Abschnitt 32, 32' über.

Der rücklaufende Abschnitt 32, 32' erstreckt sich vom freien Ende 14 der Druckgasleitung 16 wendelförmig zum anschlussseitigen Ende 12 hin, und zwar bis zum zweiten Anschlusselement 26. Der rücklaufende Abschnitt 32, 32' bildet sozusagen eine (flüssigkeitsgespeiste) Heizspirale aus, mittels der die Druckgasleitung 16 bzw. darin enthaltenes Druckgas, temperiert werden kann. In der Fluidleitung 16 kann hierzu temperierte Flüssigkeit zirkulieren, bspw. temperiertes Wasser.

Die Fluidleitung 16 bzw. der rücklaufende Abschnitt 32, 32' weist mehrere Bereiche 34, 34' auf, in denen die wendeförmigen Wicklungen unterschiedlich dicht gewickelt sind. So weist der rücklaufende Abschnitt 32, 32' am freien Ende der Druckluftleitung 16 einen Bereich 34 auf, in dem die wendelförmige Wicklung die höchste Dichte aufweist.

Beispielhaft liegen im Bereich 34 die wendelförmigen Wicklungen direkt aneinander an, wohingegen im Bereich 34' die
wendelförmigen Wicklungen voneinander beabstandet sind. Im Bereich 34 bildet sich somit eine Zone mit höherer Temperatur und im Bereich 34' eine Zone mit niedrigerer Temperatur aus.

Optional kann in der Druckgasleitung 16 ein Temperatur- und/oder Feuchtigkeitssensor, ein Tropfenabscheider und/oder eine Einspritzstelle zum Einspritzen von beheizter Flüssigkeit angeordnet sein (jeweils nicht gezeigt), wie oben beschrieben.

Die Versorgungseinheit 100 ist als Versorgungseinheit 100 für die voranstehend beschriebene Schlauchanordnung 10 ausgebildet. Insbesondere ist die Versorgungseinheit 100 zur Bereitstellung eines Druckgases und von Wärmeenergie zum flüssigkeitsbasierten Beheizen (Flüssigkeit dient als Trägermedium) bspw. der Schlauchanordnung 10 bzw. der Druckgasleitung 16 ausgebildet.

Die Versorgungseinheit 100 weist einen Ausgang 102 zur Bereitstellung von Druckgas auf. Dem Ausgang 102 ist eine Druckgasquelle 104 vorgeschaltet, die mit dem Ausgang 102 strömungsverbunden ist. Optional kann zwischen Druckgasquelle 104 und Ausgang 102 eine Befeuchtungseinheit (nicht gezeigt) angeordnet sein, die Druckgas mittels Flüssigkeit (bspw. Wasser) befeuchten kann, wie oben erläutert.

Zudem weist die Versorgungseinheit 100 eine Heizeinrichtung 106 zur Beheizung einer Flüssigkeit auf, wobei die Heizeinrichtung 106 einen Vorlaufanschluss 108 zur Abgabe beheizter Flüssigkeit und einen Rücklaufanschluss 110 zur Einspeisung rückgeführter Flüssigkeit auf. Der Vorlaufanschluss 108, der Rücklaufanschluss 110 und der Ausgang 102 sind in einem Anschlussbereich 111 benachbart zueinander angeordnet.

Der Vorlaufanschluss 108 und der Rücklaufanschluss 110 sind mittels einer Strömungsverbindung 112 verbunden. In der Strömungsverbindung 112 sind ein Heizelement 114 und eine Pumpe 116 angeordnet. Darüber kann in der Strömungsverbindung 112 befindliche Flüssigkeit beheizt (Heizelement 114) und zirkuliert werden (Pumpe 116). Optional können eine Entlüftung, ein Druckausgleichselement und/oder eine Steuerung für die Versorgungseinheit 100 vorgesehen sein (nicht gezeigt), wie oben erläutert.

Die Strömungsverbindung 112 und die in der Störmungsverbindung 112 zwischen dem Vorlaufanschluss 108 und dem Rücklaufanschluss 110 angeordneten Komponenten bilden Teil eines Heizkreislaufs. Die Fluidleitung 22 bildet einen weiteren Teil des Heizkreislaufs. Sind das erste Anschlusselement 24 am Vorlaufanschluss 108 und das zweite Anschlusselement 26 am Rücklaufanschluss 110 angeschlossen, ist der Heizkreislauf geschlossen. Dann kann eine Temperierung der Druckgasleitung 16 bzw. von darin angeordnetem Druckgas erfolgen.

## Patentansprüche

1. Schlauchanordnung (10), mit einer Druckgasleitung (16), **dadurch gekennzeichnet, dass** eine Fluidleitung (22) zur Temperierung der Druckgasleitung (16) vorgesehen ist, wobei die Fluidleitung (22) an oder in der Druckgasleitung (16) angeordnet ist und sich entlang der Druckgasleitung (16) erstreckt.

2. Schlauchanordnung (10) nach Anspruch 1, **dadurch gekennzeichnet, dass** die Druckgasleitung (16) zumindest an einem Ende (12, 14), vorzugsweise jeweils an beiden Enden (12, 14), ein Anschlusselement (18, 20) zum Anschluss an Druckgas bereitstellende oder verbrauchende Komponenten aufweist und/oder dass die Fluidleitung (22) an einem Ende ein erstes Anschlusselement (24) und am anderen Ende ein zweites Anschlusselement (26) zum Anschluss an fluidführende Komponenten aufweist.

3. Schlauchanordnung (10) nach Anspruch 2, **dadurch gekennzeichnet, dass** das erste Anschlusselement (24) und das zweite Anschlusselement (26) der Fluidleitung (22) beide am gleichen Ende (12) der Druckgasleitung (16) angeordnet sind.

4. Schlauchanordnung (10) nach einem der voranstehenden Ansprüche, **dadurch gekennzeichnet, dass** die Druckgasleitung (16) und die Fluidleitung (22) ineinander geführt sind oder dass sich die Druckgasleitung (16) entlang einer Längsrichtung (28) erstreckt und die Fluidleitung (22) zumindest abschnittsweise wendelförmig an oder in der Druckgasleitung (16) geführt ist.

5. Schlauchanordnung (10) nach einem der voranstehenden Ansprüche, **dadurch gekennzeichnet, dass** die Fluidleitung (22) einen vorlaufenden Abschnitt (30) und einen rücklaufenden Abschnitt (32, 32') aufweist, wobei sich der vorlaufende Abschnitt (30) ausgehend vom anschlussseitigen Ende (12) entlang der Druckluftleitung (16) zum freien Ende (14) der Druckluftleitung (16) erstreckt, und wobei sich der rücklaufende Abschnitt (32, 32') wendelförmig an oder in der Druckgasleitung (16) zum anschlussseitigen Ende (12) erstreckt.

6. Schlauchanordnung (10) nach Anspruch 4 oder 5, **dadurch gekennzeichnet, dass** die Fluidleitung (22) oder der rücklaufende Abschnitt (32, 32') mehrere Bereiche (34, 34') aufweist, in denen die wendelförmigen Wicklungen jeweils unterschiedlich dicht gewickelt sind.

7. Schlauchanordnung (10) nach einem der Ansprüche 4 bis 6, **dadurch gekennzeichnet, dass** die Fluidleitung (16) oder der rücklaufende Abschnitt (32, 32') am freien Ende der Druckluftleitung (14) einen Bereich (34) aufweist, in dem die wendelförmige Wicklung die höchste Dichte aufweist.

8. Schlauchanordnung (10) nach einem der voranstehenden Ansprüche, **dadurch gekennzeichnet, dass** in der Druckgasleitung (16) der Schlauchanordnung (10) ein Temperatur- und/oder Feuchtigkeitssensor angeordnet ist, der eine drahtlose oder drahtgebundene Signalübertragung aufweist.

9. Schlauchanordnung (10) nach einem der voranstehenden Ansprüche, **dadurch gekennzeichnet, dass** in der Druckgasleitung (16) der Schlauchanordnung (10) ein Tropfenabscheider angeordnet ist.

10. Schlauchanordnung (10) nach einem der voranstehenden Ansprüche, **dadurch gekennzeichnet, dass** in der Druckgasleitung (16) der Schlauchanordnung (10) eine Einspritzstelle zum Einspritzen beheizter Flüssigkeit, insbesondere Heißwasser, angeordnet ist.

11. Versorgungseinheit (100) für eine Schlauchanordnung (10), insbesondere eine Schlauchanordnung (10) nach einem der voranstehenden Ansprüche, **dadurch gekennzeichnet, dass** die Versorgungseinheit (100) einen Ausgang (102) zur Bereitstellung von Druckgas aufweist und dass die Versorgungseinheit (100) eine Heizeinrichtung (106) zur Beheizung einer Flüssigkeit aufweist, wobei die Heizeinrichtung (106) einen Vorlaufanschluss (108) zur Abgabe beheizter Flüssigkeit und einen Rücklaufanschluss (110) zur Einspeisung rückgeführter Flüssigkeit aufweist.

12. Versorgungseinheit nach Anspruch 11, **dadurch gekennzeichnet, dass** der Vorlaufanschluss (108), der Rücklaufanschluss (110) und der Ausgang (102) in einem Anschlussbereich (111) benachbart zueinander angeordnet sind.

13. Versorgungseinheit nach Anspruch 11 oder 12, **dadurch gekennzeichnet, dass** die Heizeinrichtung (106) ein Heizelement (114), eine Pumpe (116), eine Entlüftung und/oder ein Druckausgleichselement aufweist.

14. Versorgungseinheit nach einem der Ansprüche 11 bis 13, **dadurch gekennzeichnet, dass** eine Steuerung für die Versorgungseinheit (100) vorgesehen ist und/oder dass eine Druckgasquelle (104) zur Bereitstellung von Druckgas vorgesehen ist, wobei die Druckgasquelle (104) mit dem Ausgang (102) strömungsverbunden ist.

15. Kombination aus einer Schlauchanordnung (10) nach einem der Ansprüche 1 bis 10 und einer Versorgungseinheit (100) nach einem der Ansprüche 11 bis 14.
